# EUROPEAN PATENT APPLICATION

(11) **EP 1 783 164 A1**
(43) Date of publication of application: **09.05.2007**
(21) Application number: 06022123.1
(22) Date of filing: 23.10.2006
(51) Int. Cl.: C08K 5/544

(54) **Filled elastomeric compounds**

(30) Priority: 03.11.2005 US 268184
(71) Applicant: Lanxess Inc., Sarnia, Ontario N7T 7M2 (CA)
(72) Inventor: Resendes, Rui, Corunna Ontaria N0N 1G0 (CA); Hickey, Janice, Nicole, Gloucester, Ontario K1J 7B8 (CA)
(74) Representative: Zobel, Manfred

(57) **Abstract**

The present invention provides a process for preparing a filled halobutyl elastomer, which includes mixing a halobutyl elastomer, mineral filler and a silylated additive. The present invention also provides a filled halobutyl elastomer containing a mineral filler and a silylated additive.

## Description

### FIELD OF THE INVENTION

The present invention relates to filled halogenated butyl elastomers, such as bromobutyl elastomers (BIIR).

### BACKGROUND OF THE INVENTION

It is known that reinforcing fillers such as carbon black and silica greatly improve the strength and fatigue properties of elastomeric compounds. It is also known that chemical interaction occurs between the elastomer and the filler. For example, good interaction between carbon black and highly unsaturated elastomers such as polybutadiene (BR) and styrene butadiene copolymers (SBR) occurs because of the large number of carbon-carbon double bonds present in these copolymers. Butyl elastomers may have only one tenth, or fewer, of the carbon-carbon double bonds found in BR or SBR, and compounds made from butyl elastomers are known to interact poorly with carbon black. For example, a compound prepared by mixing carbon black with a combination of BR and butyl elastomers results in domains of BR, which contain most of the carbon black, and butyl domains which contain very little carbon black. It is also known that butyl compounds have poor abrasion resistance.

Canadian Patent Application 2,293,149 shows that it is possible to produce filled butyl elastomer compositions with improved properties by combining halobutyl elastomers with silica and specific silanes. These silanes act as dispersing and bonding agents between the halogenated butyl elastomer and the filler. However, one disadvantage of the use of silanes is the evolution of alcohol during the process of manufacture and potentially during the use of the manufactured article produced by this process. Additionally, silanes significantly increase the cost of the resulting manufactured article.

Co-pending Canadian Patent Application 2,339,080 discloses filled halobutyl elastomeric compounds containing certain organic compounds having at least one basic nitrogen-containing group and at least one hydroxyl group enhance the interaction of halobutyl elastomers with carbon-black and mineral fillers, resulting in improved compound properties such as tensile strength and abrasion (DIN).

U.S. Patent No. 6,706,804 discloses a process for preparing a filled halobutyl elastomer comprising admixing at least one halobutyl elastomer, at least one mineral filler, and at least one silazane compound or mixture of a silazane compound and an additive which contains at least one hydroxyl group and at least one functional group having a basic amine group, and curing the resulting filled halobutyl elastomer mixture.

### SUMMARY OF THE INVENTION

The present invention provides a process for preparing compositions containing halobutyl elastomers, at least one mineral filler and at least one silylated additive derived from a compound containing at least one hydroxyl group and a functional group containing a basic amine. The additive optionally may contain a primary alcohol group and an amine group separated by methylene bridges, which may be branched.

The invention also provides filled halobutyl elastomer compositions comprising halobutyl elastomers, at least one mineral filler and at least one silylated additive derived from a compound containing at least one hydroxyl group and a functional group containing a basic amine.

Surprisingly, it has been discovered that it is possible to balance the physical properties of a halobutyl elastomer through the appropriate selection of silylated additives without the use of low flashpoint silizane compounds.

Accordingly, the present invention also provides a process, which includes mixing a halobutyl elastomer with at least one mineral filler, in the presence of at least one silylated additive, and curing the resulting filled halobutyl elastomer. According to the present invention, the resulting filled halobutyl elastomer has improved properties.

### BRIEF DESCRIPTION OF THE DRAWINGS

Figure 1 illustrates the stress strain plots of filled halobutyl elastomers.
Figure 2 illustrates the Mooney Scorch plots for the filled halobutyl elastomers.

### DETAILED DESCRIPTION OF THE INVENTION

The phrase "halobutyl elastomer(s)" as used herein refers to a chlorinated or brominated butyl elastomer. Brominated butyl elastomers are preferred, and the present invention is illustrated, by way of example, with reference to bromobutyl elastomers. It should be understood, however, that the present invention extends to the use of chlorinated butyl elastomers.

Halobutyl elastomers suitable for use in the present invention include, but are not limited to, brominated butyl elastomers. Such elastomers may be obtained by bromination of butyl rubber, which is a copolymer of an isoolefin, usually isobutylene and a co-monomer that is usually a C₄ to C₆ conjugated diolefin, preferably isoprene and brominated isobutene-isoprene-copolymers (BIIR). Co-monomers other than conjugated diolefins can be used, such as alkyl-substituted vinyl aromatic co-monomers which includes C₁-C₄-alkyl substituted styrene. An example of a halobutyl elastomer which is commercially available is brominated isobutylene methylstyrene copolymer (BIMS) in which the co-monomer is p-methylstyrene.

Brominated butyl elastomers typically contain in the range of from 0.1 to 10 weight percent, preferably 0.5 to 5 weight percent of repeating units derived from diolefin, preferably isoprene, and in the range of from 90 to 99.9 weight percent, preferably 95 to 99.5 weight percent of repeating units derived from isoolefin, preferably isobutylene, based upon the hydrocarbon content of the polymer, and in the range of from 0.1 to 9 weight percent, preferably 0.75 to 2.3 weight percent and more preferably from 0.75 to 2.3 weight percent bromine, based upon the bromobutyl polymer. A typical bromobutyl polymer has a molecular weight, expressed as the Mooney viscosity according to DIN 53 523 (ML 1 + 8 at 125°C), in the range of from 25 to 60.

A stabilizer may be added to the brominated butyl elastomer. Suitable stabilizers include calcium stearate and epoxidized soy bean oil, preferably used in an amount in the range of from 0.5 to 5 parts by weight per 100 parts by weight of the brominated butyl rubber (phr).

Examples of suitable brominated butyl elastomers include LANXESS Bromobutyl 2030, LANXESS Bromobutyl 2040 (BB2040), and LANXESS Bromobutyl X2 commercially available from LANXESS Corporation. BB2040 has a Mooney viscosity (ML 1+8 @ 125°C) of 39 ± 4, a bromine content of 2.0 ± 0.3 wt% and an approximate molecular weight of 500,000 grams per mole.

The brominated butyl elastomer used in the process of the present invention may also be a graft copolymer of a brominated butyl rubber and a polymer based upon a conjugated diolefin monomer. Co-pending Canadian Patent Application 2,279,085 is directed towards a process for preparing such graft copolymers by mixing solid brominated butyl rubber with a solid polymer based on a conjugated diolefin monomer which also includes some C-S-(S)ₙ-C bonds, where n is an integer from 1 to 7, the mixing being carried out at a temperature greater than 50°C and for a time sufficient to cause grafting. The bromobutyl elastomer of the graft copolymer can be any of those described above. The conjugated diolefins that can be incorporated in the graft copolymer generally have the structural formula: 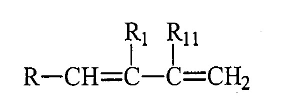 wherein R is a hydrogen atom or an alkyl group containing from 1 to 8 carbon atoms and wherein R₁ and R₁₁ can be the same or different and are selected from hydrogen atoms or alkyl groups containing from 1 to 4 carbon atoms. Suitable conjugated diolefins include 1,3-butadiene, isoprene, 2-methyl-1,3-pentadiene, 4-butyl-1,3-pentadiene, 2,3-dimethyl-1,3-pentadiene 1,3-hexadiene, 1,3-octadiene, 2,3-dibutyl-1,3-pentadiene, 2-ethyl-1,3-pentadiene, 2-ethyl-1,3-butadiene and the like. Conjugated diolefin monomers containing from 4 to 8 carbon atoms are preferred, 1,3-butadiene and isoprene being more preferred.

The polymer based on a conjugated diene monomer can be a homopolymer, or a copolymer of two or more conjugated diene monomers, or a copolymer with a vinyl aromatic monomer.

The vinyl aromatic monomers, which can optionally be used, should be copolymerizable with the conjugated diolefin monomers being employed. Generally, any vinyl aromatic monomer, which is known to polymerize with organo alkali metal initiators, can be used. Such vinyl aromatic monomers usually contain in the range of from 8 to 20 carbon atoms, preferably from 8 to 14 carbon atoms. Examples of suitable vinyl aromatic monomers include styrene, alpha-methyl styrene, various alkyl styrenes including p-methylstyrene, p-methoxy styrene, 1-vinylnaphthalene, 2-vinyl naphthalene, 4-vinyl toluene and the like. Styrene is preferred for copolymerization with 1,3-butadiene alone or for terpolymerization with both 1,3-butadiene and isoprene.

According to the present invention, halogenated butyl elastomer may be used alone or in combination with other elastomers such as:
- BR -: polybutadiene;
- ABR -: butadiene/C₁-C₄ alkyl acrylate copolymers;
- CR -: polychloroprene;
- IR -: polyisoprene;
- SBR -: styrene/butadiene copolymers with styrene contents of 1 to 60, preferably 20 to 50 wt.%;
- IIR -: isobutylene/isoprene copolymers;
- NBR -: butadiene/acrylonitrile copolymers with acrylonitrile contents of 5 to 60, preferably 10 to 40 wt.%;
- HNBR -: partially hydrogenated or completely hydrogenated NBR; or
- EPDM -: ethylene/propylene/diene copolymers.

Fillers according to the present invention are composed of particles of a mineral, suitable fillers include silica, silicates, clay (such as bentonite), gypsum, alumina, titanium dioxide, talc and the like, as well as mixtures thereof.

Further examples of suitable fillers include:
- highly dispersable silicas, prepared e.g. by the precipitation of silicate solutions or the flame hydrolysis of silicon halides, with specific surface areas of 5 to 1000, preferably 20 to 400 m²/g (BET specific surface area), and with primary particle sizes of 10 to 400 nm; the silicas can optionally also be present as mixed oxides with other metal oxides such as Al, Mg, Ca, Ba, Zn, Zr and Ti;
- synthetic silicates, such as aluminum silicate and alkaline earth metal silicate;
- magnesium silicate or calcium silicate, with BET specific surface areas of 20 to 400 m²/g and primary particle diameters of 10 to 400 nm;
- natural silicates, such as kaolin and other naturally occurring silica;
- natural clays, such as montmorillonite and other naturally occurring clays;
- organophilically modified clays such as organophilically modified montmorillonite clays (e.g. Cloisite® Nanoclays available from Southern Clay Products) and other organophilically modified naturally occurring clays;
- glass fibers and glass fiber products (matting, extrudates) or glass microspheres;
- metal oxides, such as zinc oxide, calcium oxide, magnesium oxide and aluminum oxide;
- metal carbonates, such as magnesium carbonate, calcium carbonate and zinc carbonate;
- metal hydroxides, e.g. aluminum hydroxide and magnesium hydroxide or combinations thereof.

Because these mineral particles have hydroxyl groups on their surface, rendering them hydrophilic and oleophobic, it is difficult to achieve good interaction between the filler particles and the butyl elastomer. For many purposes, the preferred mineral is silica, especially silica prepared by the carbon dioxide precipitation of sodium silicate.

Dried amorphous silica particles suitable for use as mineral fillers in accordance with the present invention have a mean agglomerate particle size in the range of from 1 to 100 microns, preferably between 10 and 50 microns and more preferably between 10 and 25 microns. It is preferred that less than 10 percent by volume of the agglomerate particles are below 5 microns or over 50 microns in size. A suitable amorphous dried silica has a BET surface area, measured in accordance with DIN (Deutsche Industrie Norm) 66131, of between 50 and 450 square meters per gram and a DBP absorption, as measured in accordance with DIN 53601, of between 150 and 400 grams per 100 grams of silica, and a drying loss, as measured according to DIN ISO 787/11, of from 0 to 10 percent by weight. Suitable silica fillers are commercially available under the trademarks HiSil 210, HiSil 233 and HiSil 243 available from PPG Industries Inc. Also suitable are Vulkasil S and Vulkasil N, commercially available from Bayer AG.

Mineral fillers can also be used in combination with known non-mineral fillers, such as
- carbon blacks; suitable carbon blacks are preferably prepared by the lamp black, furnace black or gas black process and have BET specific surface areas of 20 to 200 m²/g, for example, SAF, ISAF, HAF, FEF or GPF carbon blacks;
   or
- rubber gels, preferably those based on polybutadiene, butadiene/styrene copolymers, butadiene/acrylonitrile copolymers and polychloroprene.

Non-mineral fillers are not normally used as filler in the halobutyl elastomer compositions of the present invention, but in some embodiments they may be present in an amount up to 40 phr. It is preferred that the mineral filler should constitute at least 55% by weight of the total amount of filler. If the halobutyl elastomer composition of the present invention is blended with another elastomeric composition, that other composition may contain mineral and/or non-mineral fillers.

Additives suitable to be silylated according to the present invention and which give enhanced physical properties to mixtures of halobutyl elastomers, have at least one hydroxyl group and a functional group containing a basic amine and preferably also contain a primary alcohol group and an amine group separated by methylene bridges, which may be branched. Such compounds have the general formula HO-A-NH₂; wherein A is a C₁ to C₂₀ alkylene group, which may be linear or branched.

More preferably, the number of methylene groups between the two functional groups should be in the range of from 1 to 4. Examples of preferred additives include monoethanolamine and N,N-dimethyaminoethanol.

A silylated dimethylaminoalcohol according to the present invention preferably has the following formula: 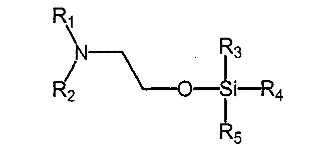 wherein R₁, R₂, R₃, R₄ and R₅ is a linear, branched or cyclic C₁-C₂₁ alkyl or aryl group, preferably CH₃. In addition, R₃ - R₅ can be a proton and each R₁, R₂, R₃, R₄ and R₅ can possess a heteroatom, such as B, Si, N, P, O or S.

The silylated additive may also be derived from a protein, aspartic acid, 6-amino caprioc acid, diethanol amine or triethanolamine. Silylated additives according to the present invention can be prepared according to known synthetic methodologies such as those described in J. Org. Chem. 1983, 47, 3966.

The amount of filler to be incorporated into the halobutyl elastomer can vary between wide limits. Typical amounts of filler range from 20 parts to 250 parts by weight, preferably from 30 parts to 100 parts, more preferably from 40 to 80 parts per hundred parts of elastomer. The amount of silylated additive used in the elastomer is typically in the range of from 0.5 to 10 parts per hundred parts of elastomer, preferably of from 1 to 3 parts per hundred parts of elastomer. The silylated additive can be used alone or in conjuction with other additives known to those skilled in the art to enhance the interaction between the halobutyl elastomer and the siliceous filler(s).

Furthermore up to 40 parts of processing oil, preferably from 5 to 20 parts, per hundred parts of elastomer, may be present. Further, a lubricant, for example a fatty acid such as stearic acid, may be present in an amount up to 3 parts by weight, more preferably in an amount up to 2 parts by weight.

The halobutyl elastomer(s), filler(s) and silylated additive derived from a compound containing at least one hydroxyl group and a functional group containing a basic amine mixtures are mixed together, suitably at a temperature in the range of from 25 to 200°C. It is preferred that the mixing temperature be greater than 60°C, and a temperature in the range of from 90 to 150°C is preferred. It is preferred that the temperature of the mixing is not too high, and more preferably does not exceed 150°C, since higher temperatures may cause curing to proceed undesirably far and thus impede subsequent processing. The product of mixing these four ingredients at a temperature not exceeding 150°C is a compound which has good stress/strain properties and which can be readily processed further on a warm mill with the addition of curatives.

Normally the mixing time does not exceed one hour; a time in the range from 2 to 30 minutes is usually adequate. The mixing is suitably carried out on a two-roll mill mixer, which provides good dispersion of the filler within the elastomer. Mixing may also be carried out in a Banbury mixer, or in a Haake or Brabender miniature internal mixer. An extruder also provides good mixing, and has the further advantage that it permits shorter mixing times. It is also possible to carry out the mixing in two or more stages. Further, the mixing can be carried out in different apparatuses, for example one stage may be carried out in an internal mixer and another in an extruder.

The enhanced interaction between the filler and the halobutyl elastomer results in improved properties for the filled elastomer. These improved properties include higher tensile strength, higher abrasion resistance, lower permeability and better dynamic properties. These render the filled elastomers suitable for a number of applications, including, but not limited to, use in tire treads and tire sidewalls, tire innerliners, tank linings, hoses, rollers, conveyor belts, curing bladders, gas masks, pharmaceutical enclosures and gaskets.

The filled halobutyl rubber elastomer of the present invention, and preferably filled bromobutyl rubber elastomers have many uses, preferably in tire tread compositions. Important features of a tire tread composition are that it shall have low rolling resistance, good traction, particularly in the wet, and good abrasion resistance so that it is resistant to wear. Compositions of the present invention display these desirable properties. Thus, an indicator of traction is tan δ at 0°C, with a high tan δ at 0°C correlating with good traction. An indicator of rolling resistance is tan δ at 60°C, with a low tan δ at 60°C correlating with low rolling resistance. Rolling resistance is a measure of the resistance to forward movement of the tire, and low rolling resistance is desired to reduce fuel consumption. Low values of loss modulus at 60°C are also indicators of low rolling resistance. As is demonstrated in the examples below, compositions of the present invention display high tan δ at 0°C, low tan δ at 60°C and low loss modulus at 60°C.

The present invention is further illustrated but is not intended to be limited by the following examples in which all parts and percentages are by weight unless otherwise specified.

### EXAMPLES

### Description of tests:

Hardness and Stress Strain Properties were determined with the use of an A-2 type durometer following ASTM D-2240 requirements. The stress strain data was generated at 23°C according to the requirements of ASTM D-412 Method A. Die C dumbbells cut from 2mm thick tensile sheets (cured for tc90+5 minutes at 160°C) were used. DIN abrasion resistance was determined according to test method DIN 53516. Sample buttons for DIN abrasion analysis were cured at 160 °C for tc90+10 minutes. Mooney scorch was measured at 125°C with the use of an Alpha Technologies MV 2000 according to ASTM 1646. The tc90 times were determined according to ASTM D-5289 with the use of a Moving Die Rheometer (MDR 2000E) using a frequency of oscillation of 1.7 Hz and a 1° arc at 170°C for 30 minutes total run time. Curing was achieved with the use of an Electric Press equipped with an Allan-Bradley Programmable Controller. ¹H NMR spectra were recorded with a Bruker DRX500 spectrometer (500.13 MHz ¹H) in CDCl₃ with chemical shifts referenced to tetramethylsilane.

### Description of Ingredients and General Mixing Procedure:

| **Compound** | **Supplier** |
|---|---|
| Bayer^{®} Bromobutyl^{™} 2030 | LANXESS Inc. |
| Hexamethyldisilazane (HMDZ) | Aldrich |
| HiSil 233 | PPG Industries |
| Dimethylethanolamine (DMAE) | Aldrich |
| Stearic Acid Emersol 132 NF | Acme Hardesty Co |
| Sulfur (NBS) | NIST |
| Zinc Oxide | St. Lawrence Chemical Co. |
| Saccharin | Aldrich |

### Example 1 (N,N-dimethyl-N-{2-[(trimethylsilyl)oxylethyl}amine)

Example 1 was prepared by a variation of the method reported in J. Org. Chem. 1983, 47, 3966. A round bottom flask equipped with a reflux condenser and a nitrogen gas inlet adapter was charged with Saccharin (0.405 g, 0.002 mol) and DMAE (50 mL, 0.498 mol). This mixture was then heated to 110°C under agitation at which point HMDZ (70.3 mL, 0.333 mol) was added. The reaction mixture was mixed at this temperature under a dynamic flow of dry nitrogen gas. After 4 h, the reaction temperature was lowered to 50 °C, at which point methanol (2.28 mL, 0.056 mol) was added. The reaction was allowed to proceed at this temperature for an additional 2 h. At this point, the water supply to the reflux condenser was stopped and the reaction temperature raised to 110°C. After an additional 2 h, ca. 25 mL of Example 1 was isolated. ¹H NMR (500 MHz, CDCl₃): δ 0.1 (s, 9H, -Si(C*H*₃)₃), 2.24 (s, 6H, (C*H*₃)₂N-), 2.42 (t, 2H, -NC*H*₂CH₂O-), 3.65 (t, 2H, -NCH₂C*H*₂O-) ppm.

### Examples 2-4

The examples were prepared, according to the formulations given in Table 1, with the use of a 75 g Brabender internal mixer equipped with intermeshing rotors. The Mokon temperature was first allowed to stabilize at 60 °C. With the rotor speed set at 77 rpm, ingredients 1A and 1B were introduced into the mixer. After 2 minutes, ingredients 1C were added to the mixer. After 3 and 4 minutes, a sweep was performed. The compound was dumped after a total mix time of 5 minutes. The curatives (2A) were then added on a RT, two-roll mill.

**Table 1: Examples 2 - 4 Formulations**

| **Component** | **Tag** | **Example 2 Comparative** | **Example 3 Comparative** | **Example 4** |
|---|---|---|---|---|
| Lanxess Bromobutyl 2030 | 1A | 100 | 100 | 100 |
| 1,1,1,3,3,3-Hexamethyldisilazane | 1B | -- | 1.45 | -- |
| HiSil 233 | 1B | 30 | 30 | 30 |
| Maglite D | 1B | 1 | 1 | 1 |
| Example 1 | 1B | -- | -- | 2.9 |
| N,N-Dimethylethanolamine | 1B | -- | 1.6 | -- |
| 1,1,1,3,3,3-Hexamethyldisilazane | 1C | -- | 1.45 | -- |
| HiSil 233 | 1C | 30 | 30 | 30 |
| Example 1 | 1C | -- | -- | 2.9 |
| N,N-Dimethylethanolamine | 1C | -- | 1.6 | -- |
| Stearic Acid | 2A | 1 | 1 | 1 |
| Sulfur | 2A | 0.5 | 0.5 | 0.5 |
| Zinc Oxide | 2A | 1.5 | 1.5 | 1.5 |

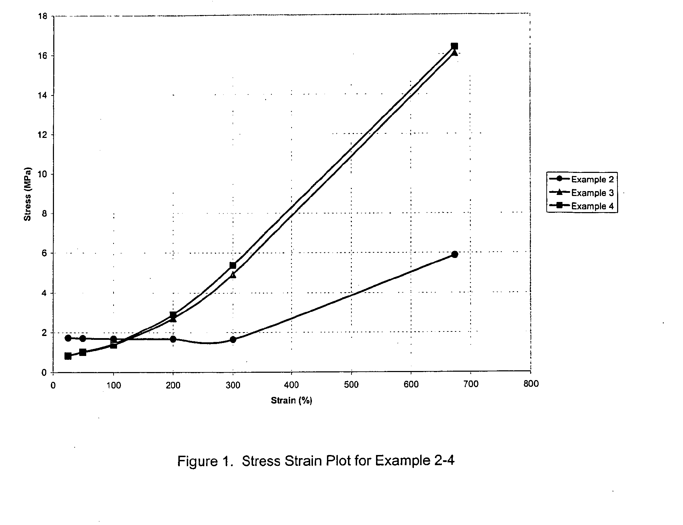

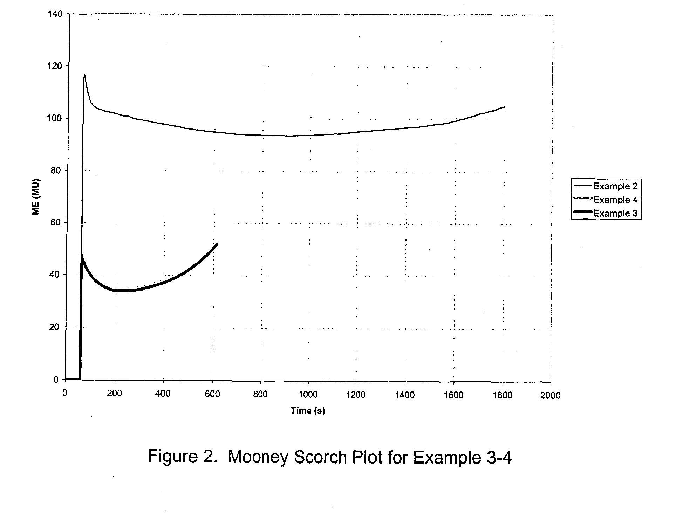

Previous work has shown that the addition of aminoalcohols such as DMAE effectively compatibilizes BIIR and silica allowing for the production of BIIR-silica compounds with amiable physical properties (Canadian Patent Application 2,339,080). However, the use of DMAE alone detracts from the overall processability of the resulting formulation. Future work went on to demonstrate the positive effect of HMDZ (U.S. Patent No. 6,706,804) on the scorch safety of BIIR-containing silica tread compounds. While the scorch safeties determined for these compounds were acceptable, a practical need to identify less volatile alternatives to HMDZ remained. Specifically, the low volatility of HMDZ along with the extremely low flash point (ca. 8 °C) may prohibit the use of this modifier within an industrial arena. Recognizing this, silyated-DMAE (Example 1) was investigated as a replacement for DMAE and HMDZ in silica filled BIIR compounds. As can be seen from the data obtained from Examples 2 - 4 (see Table 2, Figures 1 and 2), the use of Example 1 in BIIR-silica formulations (Example 4) gave rise to raw compounds and vulcanizates which possessed physical properties which were comparable or slightly better than that measured for the BIIR-silica compound which employed the use of DMAE and HMDZ (Example 3). Specifically, the stress strain data depicted in Figure 1 suggests that Example 3 and 4 possess similar levels of reinforcement (as evidenced by the slope of the stress-strain plot). Importantly, both Examples 3 and 4 exhibit significantly improved levels of reinforcement when compared to Example 2. As can be seen from Figure 2, Examples 3 and 4 possess significantly lower compound viscosities than Example 2. This observation is indicative of compounds with improved processability characteristics. The fact that the physical properties of Example 4 were obtained without the use of HMDZ represents a significant technical and practical advantage.

**Table 2: Physical Properties of Examples 2-4**

| | Example 2 | Example 3 | Example 4 |
|---|---|---|---|
| Stress Strain | | | |
| Dumbell | Die C | Die C | Die C |
| Test Temperature (deg C) | 23 | 23 | 23 |
| Hardness Shore A2 (pts.) | 81 | 51 | 51 |
| Ultimate Tensile (MPa) | 5.88 | 16.06 | 16.36 |
| Ultimate Elongation (%) | 856 | 706 | 680 |
| Stress @ 25 (MPa) | 1.74 | 0.842 | 0.844 |
| Stress @ 50 (MPa) | 1.72 | 1.02 | 1.03 |
| Stress @ 100 (MPa) | 1.69 | 1.39 | 1.44 |
| Stress @ 200 (MPa) | 1.68 | 2.72 | 2.91 |
| Stress @ 300 (MPa) | 1.66 | 4.94 | 5.39 |
| M300/M100 | 0.98 | 3.55 | 3.74 |

| DIN Abrasion | | | |
|---|---|---|---|
| Cure Time (min) | 24 | 22 | 25 |
| Cure Temperature (deg C) | 160 | 160 | 160 |
| Specific Gravity | 1.1843 | 1.1791 | 1.1763 |
| Abrasion Volume Loss (mm³) | > 450 | 338 | 313 |

| MDR Cure Characteristics | | | |
|---|---|---|---|
| Frequency (Hz) | 1.7 | 1.7 | 1.7 |
| Test Temperature (deg C) | 160 | 160 | 160 |
| Degree Arc | 1 | 1 | 1 |
| Test Duration (min) | 60 | 60 | 60 |
| Torque Range (dN.m) | 100 | 100 | 100 |
| Chart No. | 1455 | 1458 | 1457 |
| MH (dN.m) | 25.42 | 20.43 | 19.42 |
| ML (dN.m) | 20.4 | 4.1 | 4.09 |
| Delta MH-ML (dN.m) | 5.02 | 16.33 | 15.33 |
| ts 1 (min) | 0.72 | 0.72 | 0.78 |
| ts 2 (min) | 6.06 | 1.14 | 1.32 |
| t' 10 (min) | 0.42 | 0.94 | 0.99 |
| t' 25 (min) | 0.91 | 2.36 | 2.74 |
| t' 50 (min) | 7.9 | 5.89 | 6.84 |
| t' 90 (min) | 19.2 | 17.41 | 19.73 |
| t' 95 (min) | 22.11 | 21.14 | 24.1 |

Although the invention has been described in detail in the foregoing for the purpose of illustration, it is to be understood that such detail is solely for that purpose and that variations can be made therein by those skilled in the art without departing from the spirit and scope of the invention except as it may be limited by the claims.

## Claims

1. A process for preparing a filled halobutyl elastomer comprising:
admixing
(a) at least one halobutyl elastomer,
(b) at least one mineral filler, and
(c) at least one silylated additive, wherein the additive has been derived from a compound containing at least one hydroxyl group and a functional group containing a basic amine
and curing the resulting filled halobutyl elastomer mixture.

2. The process according to Claim 1, wherein the halobutyl elastomer is a bromobutyl elastomer or a chlorobutyl elastomer.

3. The process according to Claim 2, wherein the additive is of the general formula 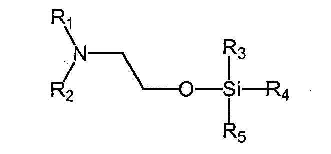 wherein R₁, R₂, R₃, R₄ and R₅ is a linear, branched or cyclic C₁-C₂₁ alkyl or aryl group.

4. The process according to Claim 3, wherein R₃ - R₅ can be a proton and optionally possess a heteroatom selected from the group consisting of B, Si, N, P, O and S.

5. The process according to Claim 1, wherein the mineral filler is silica, silicate, clay, gypsum, alumina, titanium dioxide, talc or a mixture thereof.

6. The process according to Claim 1, wherein the silylated additive is admixed in a range of between 0.5 to 10 parts per hundred parts of elastomer.

7. The process according to Claim 1, wherein the amount of filler is in the range from 20 parts to 250 parts by weight, per hundred parts of elastomer.

8. The process according to Claim 7, wherein the amount of filler is in the range from 30 parts to 100 parts by weight, per hundred parts of elastomer.

9. The process according to Claim 8, wherein the amount of filler is in the range from 40 parts to 80 parts by weight, per hundred parts of elastomer.

10. The process according to Claim 1, wherein the at least one halobutyl elastomer is a mixture of a halogenated butyl elastomer and an additional elastomer.

11. A filled halobutyl elastomer composition comprising at least one halobutyl elastomer, at least one mineral filler and at least one silylated additive derived from a compound containing at least one hydroxyl group and at least one functional group having a basic amine group.

12. A filled, cured halobutyl elastomer composition comprising at least one halobutyl elastomer, at least one mineral filler and at least one silylated additive derived from a compound containing at least one hydroxyl group and at least one functional group having a basic amine group.

13. The composition according to Claim 12, wherein the filled, cured halobutyl elastomer is a tire tread.

14. The composition according to Claim 12, wherein the filled, cured halobutyl elastomer is an innerliner for a vehicle tire.

15. The composition according to Claim 12, wherein the filled, cured halobutyl elastomer is a sidewall for a vehicle tire.
